(19) Europäisches Patentamt
European Patent Office
Office européen des brevets

(11) EP 4 190 586 A1

(12) **EUROPEAN PATENT APPLICATION**
published in accordance with Art. 153(4) EPC

(43) Date of publication:
**07.06.2023 Bulletin 2023/23**

(21) Application number: **21851297.8**

(22) Date of filing: **28.07.2021**

(51) International Patent Classification (IPC):
***B60C 1/00*** (2006.01) ***C08K 5/21*** (2006.01) ***C08K 7/02*** (2006.01) ***C08L 7/00*** (2006.01) ***C08L 9/00*** (2006.01) ***C08L 9/06*** (2006.01) ***C08K 3/26*** (2006.01)

(52) Cooperative Patent Classification (CPC):
**B60C 1/00; C08K 3/26; C08K 5/21; C08K 7/02; C08L 7/00; C08L 9/00; C08L 9/06**

(86) International application number:
**PCT/JP2021/027973**

(87) International publication number:
**WO 2022/025139 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2020 JP 2020128631**

(71) Applicant: **BRIDGESTONE CORPORATION**
**Chuo-ku**
**Tokyo 104-8340 (JP)**

(72) Inventors:
- **KOMEDA, Misaki**
**Tokyo 104-8340 (JP)**
- **YOSHIHARA, Taiga**
**Tokyo 104-8340 (JP)**
- **SUZUKI, Kenji**
**Tokyo 104-8340 (JP)**

(74) Representative: **Marks & Clerk LLP**
**15 Fetter Lane**
**London EC4A 1BW (GB)**

# (54) RUBBER COMPOSITION, VULCANIZED RUBBER, TREAD RUBBER FOR TIRE, AND TIRE

(57) An object of the present disclosure is to provide a rubber composition having a low environmental impact and capable of reliably improving the on-ice performance of a tire. To achieve the object, the present disclosure provides a rubber composition, comprising: a rubber component containing diene rubber; an inorganic blowing agent; and a blowing aid, wherein the total content of the inorganic blowing agent and the blowing aid is in the range of 1 to 20 parts by mass with respect to 100 parts by mass of the rubber component, and a mass ratio of the inorganic blowing agent with respect to the blowing aid (the inorganic blowing agent: the blowing aid) is in the range of 1 : 1.1 to 1 : 3.3.

EP 4 190 586 A1

**Description**

TECHNICAL FIELD

The present invention relates to a rubber composition, vulcanized rubber, tread rubber for a tire, and a tire.

BACKGROUND ART

Tread, in particular, of a tire has been keenly studied for improving braking performance and driving performance on an icy/snowy road surface (which performances will comprehensively be referred to as "on-ice performance" hereinafter). A water film tends to be formed on an icy/snowy road surface due to frictional heat between the icy/snowy road surface and a tire and the water film thus formed possibly decreases a coefficient of friction between the tire and the icy/snowy road surface. Therefore, water film-removing capacity of a tread of a tire must be enhanced for improving the on-ice performance of the tire.
A possible solution for enhancing the water film-removing capacity of a tread of a tire is forming micro drainage grooves at a ground-contact surface of the tire, so that the micro drainage grooves remove water films and thus increase the coefficient of friction on an icy/snowy road surface, of the tire. However, in this case, the on-ice performance of the tire deteriorates as the tire is worn, although the on-ice performance improves at the initial stage of use of the tire. Accordingly, there is a demand for a technique capable of preventing the on-ice performance from deteriorating even when a tire is worn.
In this regard, there is a known technique of applying a foamed rubber to a tire tread so that the tire tread has the water film-removing capacity. A rubber composition including a rubber component and a blowing agent is generally employed for the foamed rubber, wherein an organic blowing agent has conventionally been used as the blowing agent, although an inorganic blowing agent was also used as the blowing agent in some cases (for example, PTL 1 shown below). It is possible to provide a rubber composition having a low impact on the environment by effectively using an inorganic blowing agent therein because an inorganic blowing agent has a relatively low environmental impact.

CITATION LIST

Patent Literature

PTL 1: WO 2017/068772 A1

SUMMARY OF THE INVENTION

(Technical Problem)

However, as a result of a study conducted by the inventors of the present disclosure, it turned out that the on-ice performance of a tire is not satisfactory and has rooms for improvement in a case where a rubber composition using an inorganic blowing agent is applied to a tread of the tire.
In view of this, an object of the present disclosure is to provide a rubber composition capable of solving the prior art problems described above, i.e., a rubber composition having a low environmental impact and capable of reliably improving the on-ice performance of a tire.
Further, another object of the present disclosure is to provide i) a vulcanized rubber and a tread rubber for a tire each of which has a low environmental impact and capable of reliably improving the on-ice performance of a tire and ii) a tire having a low environmental impact and capable of reliably improving the on-ice performance thereof.

(Solution to Problem)

The primary features of the present disclosure for achieving the aforementioned objects are as follows.
A rubber composition of the present disclosure is a rubber composition comprising: a rubber component containing diene rubber; an inorganic blowing agent; and a blowing aid, wherein

the total content of the inorganic blowing agent and the blowing aid is in the range of 1 to 20 parts by mass with respect to 100 parts by mass of the rubber component, and
a mass ratio of the inorganic blowing agent with respect to the blowing aid (the inorganic blowing agent : the blowing aid) is in the range of 1 : 1.1 to 1 : 3.3.

A vulcanized rubber of the present disclosure, as a vulcanized product of said rubber composition, characteristically has a foaming ratio in the range of 1 % to 45 %.
A tread rubber for a tire of the present disclosure is characteristically made of said rubber composition or said vulcanized rubber.
A tire of the present disclosure characteristically has said rubber composition or said vulcanized rubber in a tread portion thereof.

(Advantageous Effect)

According to the present disclosure, it is possible to provide a rubber composition having a low environmental impact and capable of reliably improving the on-ice performance of a tire.
Further, according to the present disclosure, it is possible to provide i) a vulcanized rubber and a tread rubber for a tire each of which has a low environmental impact and capable of reliably improving the on-ice performance of a tire and ii) a tire having a low environmental impact and capable of reliably improving the on-ice performance thereof.

DETAILED DESCRIPTION

Hereinafter, a rubber composition, vulcanized rubber, tread rubber for a tire, and a tire of the present disclosure will be demonstratively described in detail based on embodiments thereof.

< Rubber composition >

A rubber composition of the present disclosure characteristically includes: a rubber component containing diene rubber; an inorganic blowing agent; and a blowing aid, wherein the total content of the inorganic blowing agent and the blowing aid is in the range of 1 to 20 parts by mass with respect to 100 parts by mass of the rubber component, and a mass ratio of the inorganic blowing agent with respect to the blowing aid (the inorganic blowing agent: the blowing aid) is in the range of 1 : 1.1 to 1 : 3.3.
In the rubber composition of the present disclosure, the inorganic blowing agent generates foams when the rubber composition is vulcanized, thereby forming air bubbles (voids) in the rubber composition thus vulcanized (i.e., in vulcanized rubber). Further, the blowing aid facilitates the foaming reaction of the inorganic blowing agent and improves a foaming rate of the vulcanized rubber thus obtained. Yet further, the total content of the inorganic blowing agent and the blowing aid is set to be in the range of 1 to 20 parts by mass with respect to 100 parts by mass of the rubber component and a mass ratio of the inorganic blowing agent with respect to the blowing aid (the inorganic blowing agent : the blowing aid) is set to be in the range of 1 : 1.1 to 1 : 3.3 in the rubber composition of the present disclosure, whereby foams are generated in the rubber composition in a satisfactory manner when the rubber composition is vulcanized and a foaming rate of the vulcanized rubber improves. Applying the vulcanized rubber having a foaming rate thus improved, to a tire, ensures good water film-removing capacity of the tire, thereby improving drainage performance and thus the on-ice performance of the tire. In a case where the total content of the inorganic blowing agent and the blowing aid and/or a mass ratio of the inorganic blowing agent with respect to the blowing aid is beyond the aforementioned ranges, a foaming rate of the vulcanized rubber drops, whereby the on-ice performance of the tire cannot be improved in a satisfactory manner. Yet further, the inorganic blowing agent of the present disclosure is an inorganic compound having a relatively low impact on the environment (being not harmful to human body).
Accordingly, the rubber composition of the present disclosure, having a low impact on the environment, can improve the on-ice performance of a tire in a satisfactory manner when the rubber composition is applied to the tire.

(Rubber component)

The rubber component of the rubber composition of the present disclosure contains diene rubber. A ratio of the diene rubber in the rubber component is preferably ≥ 80 mass %, more preferably ≥ 90 mass %, and particularly preferably 100 mass %. The rubber component may contain a rubber other than diene rubber but is preferably constituted of only diene rubber.
The diene rubber may be either natural rubber (NR) or synthetic diene rubber. Alternatively, the diene rubber may include both natural rubber and synthetic diene rubber. It is possible to further improve the on-ice performance of a tire by applying a rubber composition containing at least one of natural rubber and synthetic diene rubber to the tire.
Examples of the synthetic diene rubber include isoprene rubber (IR), styrene-butadiene rubber (SBR), butadiene rubber (BR), styrene-isoprene rubber (SIR), chloroprene rubber (CR), and the like. Isoprene rubber, styrene-butadiene rubber, and butadiene rubber are preferable as the synthetic diene rubber among the examples described above. It is possible to even further improve the on-ice performance of a tire by applying a rubber composition containing therein

at least one selected from the group consisting of isoprene rubber, styrene-butadiene rubber, and butadiene rubber, to the tire. Either a single type or combination of two or more types as a blend, of the examples described above, may be used as the diene rubber (the rubber component).

The diene rubber (the rubber component) may be either an unmodified rubber or a modified rubber. In a case where the diene rubber has been modified, it is preferable that the diene rubber has been modified by at least one selected from the group consisting of a hydrocarbyloxysilane compound represented by general formula (I) shown below; a hydrocarbyloxysilane compound represented by general formula (II) shown below; a hydrocarbyloxysilane compound represented by general formula (III) shown below; a coupling agent represented by general formula (IV) shown below; a coupling agent represented by general formula (V) shown below; a lithioamine represented by general formula (VI) shown below; and vinylpyridine.

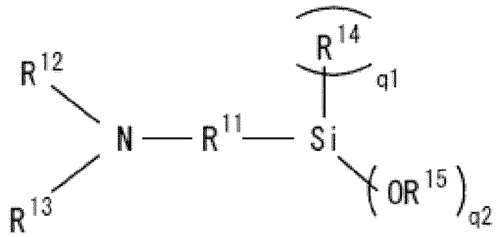

· · · · (I)

In the general formula (I), q1 + q2 = 3 (q1 is an integer in the range of 0 to 2 and q2 is an integer in the range of 1 to 3),

$R^{11}$ represents a $C_{1-20}$ divalent aliphatic/alicyclic hydrocarbon group or a $C_{6-18}$ divalent aromatic hydrocarbon group, each of $R^{12}$ and $R^{13}$ independently represents a hydrolysable group, or a $C_{1-20}$ monovalent aliphatic/alicyclic hydrocarbon group, or a $C_{6-18}$ monovalent aromatic hydrocarbon group,

$R^{14}$ represents a $C_{1-20}$ monovalent aliphatic/alicyclic hydrocarbon group or a $C_{6-18}$ monovalent aromatic hydrocarbon group, wherein $R^{14}$s may be of either the same type or different types when q1 is 2, and

$R^{15}$ represents a $C_{1-20}$ monovalent aliphatic/alicyclic hydrocarbon group or a $C_{6-18}$ monovalent aromatic hydrocarbon group, wherein $R^{15}$s may be of either the same type or different types when q2 is 2.

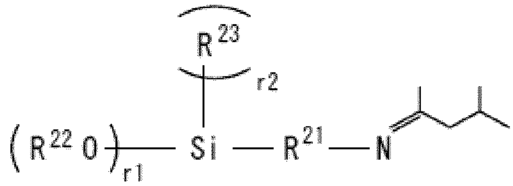

· · · · (II)

In the general formula (II), r1 + r2 = 3 (r1 is an integer in the range of 1 to 3 and r2 is an integer in the range of 0 to 2), $R^{21}$ represents a $C_{1-20}$ divalent aliphatic/alicyclic hydrocarbon group or a $C_{6-18}$ divalent aromatic hydrocarbon group, $R^{22}$ represents dimethylaminomethyl group, or dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, a $C_{1-20}$ monovalent aliphatic/alicyclic hydrocarbon group, a $C_{6-18}$ monovalent aromatic hydrocarbon group, wherein $R^{22}$s may be of either the same type or different types when r1 ≥ 2, and

$R^{23}$ represents a $C_{1-20}$ hydrocarbyloxy group, or a $C_{1-20}$ monovalent aliphatic/alicyclic hydrocarbon group or a $C_{6-18}$ monovalent aromatic hydrocarbon group, wherein $R^{23}$s may be of either the same type or different types when r2 is 2.

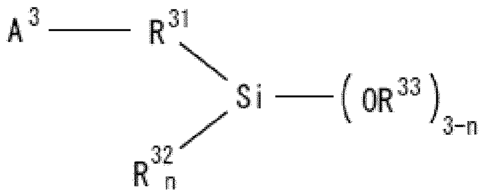

· · · · (III)

In the general formula (III), $A^3$ represents a monovalent group having at least one functional group selected from the group consisting of (thio)epoxy, (thio)isocyanate, (thio)ketone, (thio)aldehyde, imine, amide, isocyanuric acid

trihydrocarbyl ester, (thio)carboxylic acid ester, metal salt of (thio)carboxylic acid, carboxylic acid anhydride, carboxylic acid halide, and carbonic acid dihydrocarbyl ester, wherein "(thio)epoxy" represents epoxy and thioepoxy, "(thio)isocyanate" represents isocyanate and thioisocyanate, "(thio)ketone" represents ketone and thioketone, "(thio)aldehyde" represents aldehyde and thioaldehyde, "(thio)carboxylic acid ester" represents carboxylic acid ester and thiocarboxylic acid ester, "metal salt of (thio)carboxylic acid" represents metal salt of carboxylic acid and metal salt of thiocarboxylic acid,

$R^{31}$ represents a single bond or a divalent inactive hydrocarbon group preferably having 1 to 20 carbon atoms, and each of $R^{32}$ and $R^{33}$ independently represents a $C_{1-20}$ monovalent aliphatic hydrocarbon group or a $C_{6-18}$ monovalent aromatic hydrocarbon group, "n" represents an integer in the range of 0 to 2, $R^{32}$s may be of either the same type or different types when a plurality of $R^{32}$ exists, and $OR^{33}$s may be of either the same type or different types when a plurality of $OR^{33}$ exists.

It should be noted that the hydrocarbyloxysilane compound represented by the general formula (III) contains no active proton or onium salt in a molecule thereof.

Regarding the functional group of $A^3$ in the general formula (III), "imine" comprehensively represents ketimine, aldimine, and amidine and "(thio)carboxylic acid ester" comprehensively represents unsaturated carboxylic esters such as acrylates and methacrylates. Examples of metals of the metal salt of (thio)carboxylic acid include alkali metals, alkaline earth metals, Al, Sn, Zn, and the like.

Preferable examples of the divalent inactive hydrocarbon group of $R^{31}$ include a $C_{1-20}$ alkylene group. Although the alkylene group may be either normal, branched or cyclic, a normal alkylene group is preferable. Examples of the normal alkylene group include methylene group, ethylene group, trimethylene group, tetramethylene group, pentamethylene group, hexamethylene group, octamethylene group, decamethylene group, dodecamethylene group, and the like.

Examples of $R^{32}$ and $R^{33}$ include a $C_{1-20}$ alkyl group, a $C_{2-18}$ alkenyl group, a $C_{6-18}$ aryl group, a $C_{7-18}$ aralkyl group, and the like. The alkyl group and the alkenyl group may be either normal, branched or cyclic and examples thereof include methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, and the like. The aryl group may have a substituent group such as a lower alkyl group on the aromatic ring thereof and examples of such an aryl group include phenyl group, tolyl group, xylyl group, naphthyl group, and the like. The aralkyl group may have a substituent group such as a lower alkyl group on the aromatic ring thereof and examples of such an aralkyl group include benzyl group, phenethyl group, naphthylmethyl group, and the like.

In connection with $R^{32}$ and $R^{33}$, "n" as an integer in the range of 0 to 2 is preferably 0 and it is necessary that each of the molecules of $R^{32}$ and $R^{33}$ does not have active proton or onium salt therein.

Preferable examples of the hydrocarbyloxysilane compound represented by the general formula (III) include a hydrocarbyloxysilane compound having (thio)epoxy group, such as (2-glycidoxyethyl)trimethoxysilane, (2-glycidoxyethyl)triethoxysilane, (2-glycidoxyethyl)methyldimethoxysilane, (3-glycidoxypropyl)trimethoxysilane, (3-glycidoxypropyl)triethoxysilane, (3-glycidoxypropyl)methyldimethoxysilane, 2-(3,4-epoxycyclohexyl)ethyltrimethoxysilane, 2-(3,4-epoxycyclohexyl)ethyltri ethoxysilane, 2-(3,4-epoxycyclohexyl)ethyl(methyl)dimethoxysilane, 2-(3,4-epoxycyclohexyl)trimethoxysilane, and those obtained by replacing the epoxy group of the aforementioned hydrocarbyloxysilane compound having epoxy group, with thioepoxy group. (3-glycidoxypropyl)trimethoxysilane and 2-(3,4-epoxycyclohexyl)trimethoxysilane are particularly preferable among those examples. Preferable examples of a hydrocarbyloxysilane compound having imine group, as the hydrocarbyloxysilane compound represented by the general formula (III), include: triethoxysilyl compounds such as N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1 -methylpropylidene)-3 - (triethoxysilyl)-1-propaneamine, N-(4-N,N-dimethylaminobenzilidene)-3-(tri ethoxy silyl)-1 -propaneamine, N-(cyclohexylidene)-3 -(triethoxysilyl)-1 - propaneamine; trimethoxysilyl compounds obtained by replacing the triethoxy groups of the aforementioned triethoxysilyl compounds with trimethoxy groups; methyldiethoxysilyl compounds obtained by replacing the triethoxy groups of the aforementioned triethoxysilyl compounds with methyldiethoxy groups; ethyldiethoxysilyl compounds obtained by replacing the triethoxy groups of the aforementioned triethoxysilyl compounds with ethyldiethoxy groups; methyldimethoxysilyl compounds obtained by replacing the triethoxy groups of the aforementioned triethoxysilyl compounds with methyldimethoxy groups; ethyldimethoxysilyl compounds obtained by replacing the triethoxy groups of the aforementioned triethoxysilyl compounds with ethyldimethoxy groups; and the like. N-(1-methylpropylidene)-3-(triethoxysilyl)-1-propaneamine and N-(1,3-dimethylbutylidene)-3-(triethoxysilyl)-1-propaneamine are particularly preferable among those examples.

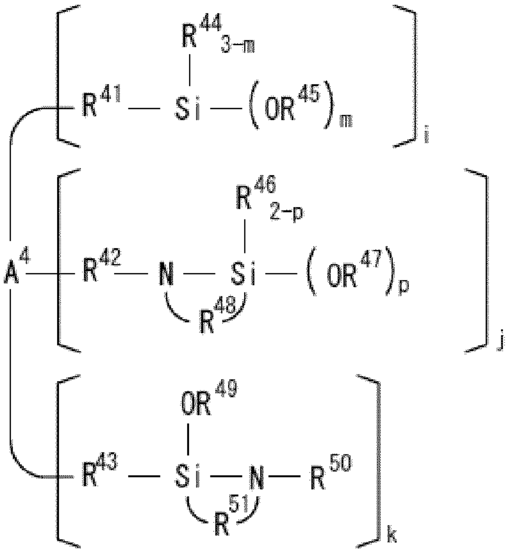

(IV)

In general formula (IV), each of $R^{41}$, $R^{42}$ and $R^{43}$ independently represents a single bond or a $C_{1-20}$ alkylene group,

each of $R^{44}$, $R^{45}$, $R^{46}$, $R^{47}$ and $R^{49}$ independently represents a $C_{1-20}$ alkyl group,
each of $R^{48}$ and $R^{51}$ independently represents a $C_{1-20}$ alkylene group,
$R^{50}$ represents a $C_{1-20}$ alkyl/trialkylsilyl group,
"m" represents an integer in the range of 1 to 3 and "p" represents 1 or 2,
regarding $R^{41}$ to $R^{51}$, each of $R^{44}$s, $R^{45}$s, and $R^{47}$s is independent of each other when a plurality of $R^{44}$s and/or a plurality of $R^{45}$s and/or a plurality of $R^{47}$s exist in connection with m and p; and each of "j" and "k" independently represents an integer in the range of 0 to 6, wherein (i + j + k) is an integer in the range of 3 to 10, and $A^4$ represents a $C_{1-20}$ hydrocarbon group or an organic group not having an active hydrogen but having at least one atom selected from the group consisting of oxygen atom, nitrogen atom, silicon atom, sulfur atom, and phosphor atom.

The coupling agent represented by the general formula (IV) is preferably at least one selected from the group consisting of tetrakis[3-(2,2-dimethoxy-1-aza-2-silacyclopentane)propyl]-1,3-propanediamine, tetrakis(3-trimethoxysilylpropyl)-1,3-propanediamine, and tetrakis(3-trimethoxysilylpropyl)-1,3-bis(aminomethy)lcyclohexane.

$(R^5)_aZX_b$ ... (V)

In general formula (V), "Z" represents tin or silicon and "X" represents chlorine or bromine,

$(R^5)$ is selected from the group consisting of a $C_{1-20}$ alkyl group, a $C_{3-20}$ cycloalkyl group, a $C_{6-20}$ aryl group, and a $C_{7-20}$ aralkyl group, and specific examples of $(R^5)$ include methyl, ethyl, n-butyl, neophyl, cyclohexyl, n-octyl, 2-ethylhexyl groups, and the like, and

$0 \le a \le 3$ and $1 \le b \le 4$, wherein $a + b = 4$.

Preferable examples of the coupling agent represented by the general formula (V) include tin chloride, $(R^5)SnCl_3$, $(R^5)_2SnCl_2$, $(R^5)_3SnCl$, and the like. Tin chloride is particularly preferable among those examples.

$(AM)Li(Q)_y$ ... (VI)

In general formula (VI), y = 0 or $0.5 \le y \le 3$ and (Q) is a solubilized component selected from the group consisting of hydrocarbon, ethers, amines, and mixtures thereof,
(AM) is represented by formula (VII) or formula (VIII) shown below.

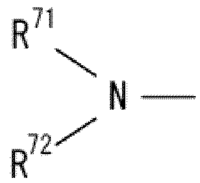

· · · (VII)

(In general formula (VII), each of $R^{71}$ and $R^{72}$ independently represents a $C_{1-12}$ alkyl/cycloalkyl/aralkyl group.)

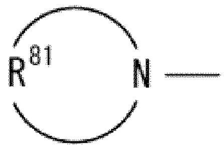

· · · (VIII)

(In general formula (VIII), $R^{81}$ represents: an alkylene group having 3 to 16 methylene groups; or a substituted alkylene group having as a substituent group a $C_{1-12}$ linear or branched alkyl/cycloalkyl/ bicycloalkyl/aryl/aralkyl group; or oxydiethylene group; or N-alkylamino-alkylene group.)

Presence of Q in the general formula (VI) makes the lithioamine soluble to a hydrocarbon solvent. Q may be a dienyl or vinyl aromatic polymers/copolymers having the degree of polymerization resulted from 3 to approximately 300 polymerization (monomeric) units. Examples of the polymers and the copolymers described above include polybutadiene, polystyrene, polyisoprene, and copolymers thereof. Other examples of Q include polar ligands such as tetrahydrofuran (THF), tetramethylethylenediamine (TMEDA), and the like.

The lithioamine represented by the general formula (VI) may be a mixture of lithioamine and an organic alkali metal. The organic alkali metal is preferably selected from the group consisting of compounds respectively represented by general formulae: $(R^{91})M$; $(R^{92})OM$; $(R^{93})C(O)OM$; $(R^{94})(R^{95})NM$; and $(R^{96})SO_3M$, wherein each of $(R^{91})$, $(R^{92})$, $(R^{93})$, $(R^{94})$, $(R^{95})$, and $(R^{96})$ is selected from the group consisting of alkyl, cycloalkyl, alkenyl, aryl, and phenyl (each of which has approximately 1 to 12 carbon atoms) and the metal component M is selected from the group consisting of Na, K, Rb, and Cs. M is preferably Na or K.

The mixture described above may preferably contain the organic alkali metal therein at a mixture ratio of approximately 0.5 to approximately 0.02 equivalents of the organic alkali metal per mole equivalent to lithium in the lithioamine.

A chelating agent can be used as a polymerization aid in the mixture of the lithioamine and the organic alkali metal, so that the polymerization should not proceed unevenly. Examples of useful chelating agent include tetramethylethylenediamine (TMEDA), oxolanyl cyclic acetals, cyclic oligomer-like oxolanyl alkanes, and the like. Cyclic oligomer-like oxolanyl alkanes are particularly preferable and examples thereof include 2,2-bis(2-tetrahydrofuryl)propane.

Examples of the vinylpyridine include 2-vinylpyridine, 4-vinylpyridine, and the like.

Among the various types of modifiers described above, N,N-bis(trimethylsilyl)-3-[diethoxy(methyl)silyl]propylamine, N-(1,3-dimethylbutylidene)-3-(triethoxysilyl)-1-propaneamine, (3-glycidoxypropyl)trimethoxysilane, tetrakis(3-trimethoxysilylpropyl)-1,3-propanediamine, tin tetrachloride, a reactant obtained from a reaction between hexamethyleneimine and n-buyllithium, 4-vinylpyridine, and 2-vinylpyridine are preferable.

It is more preferable that the rubber composition of the present disclosure contains, as the styrene-butadiene rubber, styrene-butadiene rubber having a content of bonded styrene therein of ≤ 15 mass %. It is possible to significantly improve the on-ice performance of a tire by applying the rubber composition containing styrene-butadiene rubber having a content of bonded styrene therein of ≤ 15 mass % to the tire.

A bonded styrene content in styrene-butadiene rubber can be determined from integration ratios of $^1$H-NMR spectrum in the present disclosure.

(Inorganic blowing agent)

The rubber composition of the present disclosure contains an inorganic blowing agent. The inorganic blowing agent has a low impact on the environment because it is an inorganic compound. The inorganic blowing agent causes an effect of generating foams (due to heating) when the rubber composition is vulcanized, thereby forming air bubbles (voids) in the rubber composition thus vulcanized (i.e., in the vulcanized rubber).

Examples of the inorganic blowing agent include a carbonate salt, a bicarbonate salt (i.e., a hydrogen carbonate salt), and the like. A hydrogen carbonate salt is preferable among those examples.

Examples of the carbonate salt include ammonium carbonate, sodium carbonate, potassium carbonate, and the like. Examples of the bicarbonate salt include ammonium hydrogen carbonate, sodium hydrogen carbonate, potassium hydrogen carbonate, and the like. Ammonium hydrogen carbonate and sodium hydrogen carbonate are preferable as

the inorganic blowing agent among those examples because each of ammonium hydrogen carbonate and sodium hydrogen carbonate as the inorganic blowing agent vigorously generates foams, thereby further improving a foaming rate in the resulting vulcanized rubber and thus the on-ice performance of a tire.

Either a single type or combination of two or more types of those examples may be used as the inorganic blowing agent.

Sodium hydrogen carbonate ($NaHCO_3$) is particularly preferable as the inorganic blowing agent. When the rubber composition contains sodium hydrogen carbonate, $NaHCO_3$ vigorously generates foams and further improves a foaming rate of the resulting vulcanized rubber, whereby it is possible to further improve the on-ice performance of a tire by applying the rubber composition to the tire.

A content of the inorganic blowing agent is preferably in the range of 1 to 12 parts by mass, more preferably in the range of 1 to 10 parts by mass, even more preferably in the range of 2 to 7 parts by mass, and particularly preferably in the range of 4 to 6.5 parts by mass with respect to 100 parts by mass of the rubber component in terms of obtaining a satisfactory foaming rate of the vulcanized rubber and satisfactory on-ice performance of a tire.

(Blowing aid)

The rubber composition of the present disclosure contains a blowing aid. The blowing aid has an effect of facilitating a foaming reaction of the inorganic blowing agent when the rubber composition is vulcanized, thereby enhancing a foaming rate in the resulting vulcanized rubber.

Examples of the blowing aid include urea, zinc stearate, zinc benzenesulfinate, zinc white, and the like. Urea is particularly preferable among those examples. When the rubber composition contains urea, the inorganic blowing agent vigorously generates foams and further improves a foaming rate of the resulting vulcanized rubber, whereby it is possible to further improve the on-ice performance of a tire by applying the rubber composition to the tire.

The urea may be subjected to a treatment with oil or the like. Urea can be made hydrophobic by such a treatment, so that dispersibility of urea to the rubber component is improved. Type of the oil for use in the treatment as described above is not particularly restricted and oils of various types can be used.

Either a single type or combination of two or more types of the examples described above may be used as the blowing aid.

The total content of the inorganic blowing agent and the blowing aid is in the range of 1 to 20 parts by mass with respect to 100 parts by mass of the rubber component in the rubber composition of the present disclosure. When the total content of the inorganic blowing agent and the blowing aid is less than 1 parts by mass, foams are not generated in the rubber composition in a satisfactory manner when the rubber composition is vulcanized, whereby a foaming rate of the resulting vulcanized rubber decreases. When the total content of the inorganic blowing agent and the blowing aid exceeds 20 parts by mass, the foaming rate similarly decreases.

Further, the aforementioned total content of the inorganic blowing agent and the blowing aid is preferably ≥ 5 parts by mass and more preferably ≥ 7 parts by mass with respect to 100 parts by mass of the rubber component, in terms of obtaining a satisfactory foaming rate of the vulcanized rubber. Yet further, the aforementioned total content of the inorganic blowing agent and the blowing aid is preferably ≤ 20 parts by mass and more preferably ≤ 19 parts by mass with respect to 100 parts by mass of the rubber component, in terms of obtaining a satisfactory foaming rate of the vulcanized rubber.

A mass ratio of the inorganic blowing agent with respect to the blowing aid (the inorganic blowing agent: the blowing aid) is in the range of 1 : 1.1 to 1 : 3.3 in the rubber composition of the present disclosure. In a case where the mass ratio (the inorganic blowing agent: the blowing aid) is less than 1 : < 1.1, foams are not generated in the rubber composition in a satisfactory manner when the rubber composition is vulcanized, whereby a foaming rate of the resulting vulcanized rubber decreases. In a case where the mass ratio (the inorganic blowing agent: the blowing aid) is 1 : > 3.3, the foaming rate similarly decreases.

The mass ratio of the inorganic blowing agent with respect to the blowing aid (the inorganic blowing agent: the blowing aid) described above is preferably 1 : ≥ 1.2 and more preferably 1 : ≥ 1.3 in terms of obtaining a satisfactory foaming rate of the vulcanized rubber. The mass ratio of the inorganic blowing agent with respect to the blowing aid (the inorganic blowing agent: the blowing aid) described above is preferably 1 : ≤ 3.2, more preferably 1 : ≤ 3.1, even more preferably 1 : ≤ 2.9, much more preferably 1 : ≤ 2.7, particularly preferably 1 : ≤ 2.5, and most preferably 1 : ≤ 2.3 in terms of obtaining a satisfactory foaming rate of the vulcanized rubber.

A content of the blowing aid is preferably in the range of 4 to 14 parts by mass and more preferably in the range of 6 to 14 parts by mass with respect to 100 parts by mass of the rubber component in terms of obtaining a satisfactory foaming rate of the vulcanized rubber and satisfactory on-ice performance of a tire.

(Short fiber)

The rubber composition of the present disclosure preferably further contains short fibers (more preferably, hydrophilic short fibers). "Hydrophilic short fibers" represent short fibers having a contact angle of 5° to 80° formed by

water thereon in the present disclosure. A contact angle formed by water on hydrophilic short fibers can be determined by: preparing a test piece by shaping a hydrophilic resin for use in a raw material of the hydrophilic short fibers into a flat and smooth plate; and placing a water droplet on a surface of the test piece, immediately observing the water droplet on the test piece from the right beside the test piece, and measuring an angle formed between the test piece surface and a line tangent to the water droplet surface under the conditions of temperature: 25 °C and relative humidity: 55 % by using an automatic contact angle meter "DM-301" manufactured by Kyowa Interface Science Co., Ltd.

In a case where the rubber composition contains short fibers, gas generated by the inorganic blowing agent when the rubber composition is vulcanized enters the inside of the short fibers, thereby forming voids (air bubbles) having configurations corresponding to the shapes of the short fibers in the vulcanized rubber obtained by vulcanization of the rubber composition. It is possible, by applying the vulcanized rubber to a tread of a tire, to provide an excellent water film-removing capacity with the tire and thus further improve the on-ice performance of the tire because the voids present in the vulcanized rubber effectively function as drainage microgrooves as the tire is worn.

Further, in a case where the rubber composition contains hydrophilic short fibers, gas generated by the inorganic blowing agent when the rubber composition is vulcanized enters the inside of the hydrophilic short fibers, thereby forming voids (air bubbles) having i) configurations corresponding to the shapes of the hydrophilic short fibers and ii) hydrophilic wall surfaces covered with a resin derived from the hydrophilic short fibers. As a result of this, it is possible, by manufacturing a tire by using the rubber composition containing hydrophilic short fibers in a tread of a tire, to provide excellent water film-removing capacity and drainability with the tire and thus significantly improve the on-ice performance of the tire even when the tire is worn because affinity with water improves as the hydrophilic wall surfaces of the voids are exposed at a surface of the tread by the wear and the voids thus exposed start to effectively drain water.

Yet further, in a case where the rubber composition contains hydrophilic short fibers, it is possible to make a length of each void (air bubble) in the vulcanized rubber obtained by vulcanization of the rubber composition longer, thereby successful further improving the on-ice performance of a tire.

Examples of a hydrophilic resin to be used as a raw material of the hydrophilic short fibers include a resin having a hydrophilic group in a molecule thereof. Specifically, the hydrophilic resin is preferably a resin having an oxygen atom, or a nitrogen atom, or a sulfur atom therein, more preferably a resin having at least one functional group selected from the group consisting of -OH, -COOH, -OCOR (R is an alkyl group), $-NH_2$, -NCO, and -SH, and even more preferably a resin having at least one functional group selected from the group consisting of -OH, -COOH, $-NH_2$, and -NCO.

Resins of various types can be used as a raw material of the short fibers. Specifically, examples of the hydrophilic resin which can be used as a raw material of the hydrophilic short fibers include ethylene-vinyl alcohol copolymer, vinyl alcohol homopolymer, poly(meth)acrylic acid or ester thereof, polyethylene glycol, carboxyvinyl copolymer, styrene-maleic acid copolymer, polyvinylpyrrolidone, vinylpyrrolidone-vinylacetate copolymer, mercaptoethanol, and the like. Ethylene-vinyl alcohol copolymer, vinyl alcohol homopolymer and poly(meth)acrylic acid are preferable among these examples and ethylene-vinyl alcohol copolymer is particularly preferable.

An outer surface of the hydrophilic short fiber may have a coating layer thereon formed of a low-melting point resin having an affinity for the rubber component and preferably having a melting point lower than the vulcanization highest temperature of the rubber composition. Formation of such a coating layer as described above, having high affinity for the rubber component, on the hydrophilic short fiber improves dispersability of the short fibers into the rubber component, while high affinity for water, of the inner surface of the hydrophilic short fiber, is effectively retained. Further, the low-melting point resin of the coating layer melts and is made fluid during the vulcanization process, thereby significantly contributing to better adhesion between the rubber component and the hydrophilic short fiber, so that a tire imparted with good drainage properties and high durability can be easily realized. Thickness of the coating layer, which may vary depending on the content, the average diameter, and the like of the hydrophilic short fibers, is generally in the range of 0.001 to 10 $\mu$m and preferably in the range of 0.001 to 5 $\mu$m.

The melting point of the low-melting point resin for use in the coating layer is preferably lower than the highest temperature in vulcanization of the rubber composition. The vulcanization highest temperature represents the highest temperature reached by the rubber composition during the vulcanization process of the rubber composition. In a case where the rubber composition is vulcanized in a mold, for example, the vulcanization highest temperature represents the highest temperature reached by the rubber composition in a period, from the entry of the rubber composition into the mold, to the removal of the rubber composition from the mold for cooling. Such vulcanization highest temperature as described above can be measured by, for example, embedding a thermocouple in the rubber composition. The upper limit of the melting point of the low-melting point resin, although it is not particularly restricted, is preferably selected in view of the requirements described above. In general, the upper limit of the melting point of the low-melting point resin is lower than the vulcanization highest temperature of the rubber composition preferably by at least 10 °C and more preferably by at least 20 °C. The industrial vulcanization temperature of a rubber composition is generally around 190 °C at its maximum. When the vulcanization highest temperature is set at e.g., aforementioned 190 °C, the melting point of the low-melting point resin is generally set at temperature of $< 190$ °C, preferably $\leq 180$ °C, and more preferably $\leq 170$ °C.

A polyolefin resin is preferable as the low-melting point resin and examples of the polyolefin resin include polyethylene,

polypropylene, polybutene, polystyrene, ethylene-propylene copolymer, ethylene-methacrylic acid copolymer, ethylene-ethyl acrylate copolymer, ethylene-propylene-diene terpolymer, ethylene-vinyl acetate copolymer, ionomer resins thereof, and the like.

The average length of the short fibers is preferably in the range of 0.1 to 50 mm, more preferably in the range of 1 to 7 mm, and the average diameter of the short fibers is preferably in the range of 1 μm to 2 mm, more preferably in the range of 5 μm to 0.5 mm. Setting the average length and the average diameter of the short fibers to be within the aforementioned ranges prevents the fibers from being entangled more than necessary, thereby ensuring satisfactory dispersion properties thereof.

A fiber resin disclosed in WO2018/207472, i.e., a short fiber resin (a flat resin) wherein, in a cross section taken perpendicular to a longitudinal direction thereof, provided that A is the length of the cross section along a long diameter thereof and B is the length of the cross section along a short diameter thereof that is perpendicular to the long diameter, A/B is larger than 1, may be selected as the short fiber of the present disclosure. Configuration and area of a cross section taken perpendicular to a longitudinal direction of the short fiber resin (the flat resin) and a length in the longitudinal direction of the short fiber resin are not particularly restricted, as long as A/B is larger than 1.

A configuration of a cross section taken perpendicular to the longitudinal direction of the flat resin, which may be any of ellipsoidal, triangular, rectangular, polygonal, and irregular, is preferably ellipsoidal or rectangular and more preferably ellipsoidal in terms of enhancing water absorption capacity of the vulcanized rubber.

The average area of a cross section taken perpendicular to the longitudinal direction of the flat resin is preferably in the range of 0.000001 $mm^2$ to 0.5 $mm^2$ and more preferably in the range of 0.00002 $mm^2$ to 0.2 $mm^2$ in terms of enhancing water absorption capacity of the vulcanized rubber. The average of a length C in the longitudinal direction of the flat resin is preferably in the range of 0.1 mm to 500 mm and more preferably in the range of 0.1 mm to 7 mm. Setting dimensions of the cross section and a length in the longitudinal direction of the flat resin to be within the aforementioned ranges not only enhances water absorption capacity of the vulcanized rubber but also prevents the short fiber resins from being entangled more than necessary, to facilitate satisfactory dispersion of the short fiber resins in the rubber composition. It should be noted that each of the average area of a cross section taken perpendicular to the longitudinal direction of the flat resin and the average of a length C in the longitudinal direction of the flat resin is the average value of the corresponding values of area/length C, of arbitrarily selected 100 flat resin samples.

The lengths A, B, C of a flat resin can be measured by observing the resin by using an optical microscope at a magnification ratio of $\times$ 20 to $\times$ 400.

The ratio of A/B is preferably $\geq$ 1.5 and more preferably $\geq$ 2.0 in terms of further enhancing water absorption capacity of the vulcanized rubber. The upper limit of A/B, which is not particularly restricted, is preferably $\leq$ 10 and more preferably $\leq$ 5 in terms of further enhancing water absorption capacity of the vulcanized rubber.

The length A of the flat resin, determined as the average value of 100 samples thereof, is preferably in the range of 0.001 mm to 2 mm and more preferably in the range of 0.005 mm to 0.5 mm in terms of further enhancing water absorption capacity of the vulcanized rubber.

A ratio (C/A) of a length C in the longitudinal direction of the flat resin with respect to a length A of the long diameter of a cross section of the flat resin is generally in the range of 10 to 4,000 and preferably in the range of 50 to 2,000.

A content of the short fibers is preferably in the range of 0.1 to 100 parts by mass and more preferably in the range of 1 to 50 parts by mass with respect to 100 parts by mass of the rubber component. Setting the content of the short fibers to be within the aforementioned ranges makes it possible to achieve both satisfactory on-ice performance and satisfactory wear resistance of a tire in a well-balanced manner.

(Organic acid)

The rubber composition of the present disclosure may further contain an organic acid having an SP value in the range of 9.15 to 16.0 $(cal/cm^3)^{1/2}$. The organic acid has an effect of facilitating a degradation and foaming reaction of the inorganic blowing agent when the rubber composition is vulcanized, thereby successfully matching a rate of the degradation and foaming reaction of the inorganic blowing agent with a rate of a vulcanization reaction of the rubber composition in a well-balanced manner and thus enhancing a foaming rate in the resulting vulcanized rubber. It is possible, by blending the organic acid with the rubber composition, to facilitate a degradation and foaming reaction of the inorganic blowing agent, thereby successfully matching a rate of the degradation and foaming reaction of the inorganic blowing agent with a rate of a vulcanization reaction of the rubber composition in a well-balanced manner and thus enhancing a foaming rate in the resulting vulcanized rubber, while maintaining good workability of the rubber composition. Accordingly, it is possible to further improve the on-ice performance of a tire by applying the rubber composition further containing an organic acid, to the tire.

The effect of facilitating degradation of the inorganic blowing agent is satisfactorily high when an SP value of the organic acid is $\geq$ 9.15 $(cal/cm^3)^{1/2}$. It is possible to reduce adhesiveness of the rubber composition containing an organic acid and thus suppress adhesion of the rubber composition to manufacturing facilities such as a roll in a manufacturing process of the rubber composition, thereby improving workability of the rubber composition, when an SP value of the organic acid is ≤ 16.0 $(cal/cm^3)^{1/2}$.
An SP value of the organic acid is preferably in the range of 10.5 to 14.3 $(cal/cm^3)^{1/2}$. The effect of facilitating degradation of the inorganic blowing agent is further enhanced when the SP value of the organic acid is ≥ 10.5 $(cal/cm^3)^{1/2}$ and it is possible to further reduce adhesiveness of the rubber composition containing an organic acid and thus further improve workability of the rubber composition when the SP value of the organic acid is ≤ 14.3 $(cal/cm^3)^{1/2}$.
In this respect, stearic acid generally used as a vulcanization auxiliary for a rubber composition has an SP value of 9.12 $(cal/cm^3)^{1/2}$ and thus fails to effectively facilitate degradation of the inorganic blowing agent.
An SP value (a solubility parameter) of an organic acid is calculated according to Fedors Method in the present disclosure.

The organic acid may be any of monocarboxylic acid, dicarboxylic acid, tricarboxylic acid, and the like and may be an aliphatic/aromatic compound. Further, the organic acid may have a functional group other than carboxyl group, such as hydroxyl group, ketone group, ethylenic unsaturated group, or the like.
The organic acid preferably has an aromatic ring, i.e., is preferably an aromatic compound. Further, the organic acid is preferably monocarboxylic acid. The rubber composition can further reduce adhesiveness and improve workability thereof, thereby being even less likely to adhere to manufacturing facilities such as a roll, when the organic acid has an aromatic ring.

Examples of an aliphatic monocarboxylic acid include palmitic acid. Examples of an aliphatic dicarboxylic acid include oxalic acid, malonic acid, succinic acid, glutaric acid, adipic acid, pimelic acid, suberic acid, azelaic acid, sebacic acid, and the like.
Examples of an aromatic monocarboxylic acid include benzoic acid, salicylic acid, and the like.
Examples of an aromatic dicarboxylic acid include phthalic acid, and the like. Examples of the organic acid having a functional group other than carboxyl group include tartaric acid, malic acid, maleic acid, glycolic acid, $\alpha$-ketoglutaric acid, and the like.
Either a single type or combination of two or more types of those examples may be used as the organic acid.

Benzoic acid is particularly preferable as the organic acid. The rubber composition can even further reduce adhesiveness and improve workability thereof, thereby being even less likely to adhere to manufacturing facilities such as a roll, when benzoic acid is blended with the rubber composition.

A content of the organic acid is preferably in the range of 0.1 to 7 parts by mass, more preferably in the range of 1.5 to 7 parts by mass, and particularly preferably in the range of 3 to 7 parts by mass with respect to 100 parts by mass of the rubber component in terms of obtaining satisfactory workability of the rubber composition, a satisfactory foaming rate of the vulcanized rubber, and satisfactory on-ice performance of a tire.

In a case where the rubber composition of the present disclosure contains an organic acid, the total content of the inorganic blowing agent and the organic acid is preferably ≥ 3 parts by mass and < 15 parts by mass, more preferably ≥ 5 parts by mass and < 15 parts by mass, and particularly preferably ≥ 7 parts by mass and < 15 parts by mass with respect to 100 parts by mass of the rubber component in terms of obtaining a satisfactory foaming rate of the vulcanized rubber and satisfactory on-ice performance of a tire.

In a case where the rubber composition of the present disclosure contains an organic acid, a mass ratio of the inorganic blowing agent with respect to the organic acid (the inorganic blowing agent: the organic acid) is preferably in the range of 1 : 0.5 to 1 : 1.5 and more preferably in the range of 1 : 0.7 to 1 : 1.3 in terms of obtaining a satisfactory foaming rate of the vulcanized rubber and satisfactory on-ice performance of a tire.

In a case where the rubber composition of the present disclosure contains an organic acid, the total content of the inorganic blowing agent, the blowing aid, and the organic acid is preferably in the range of 5 to 40 parts by mass, more preferably in the range of 9 to 35 parts by mass, and particularly preferably in the range of 12 to 31 parts by mass with respect to 100 parts by mass of the rubber component in terms of obtaining a satisfactory foaming rate of the vulcanized rubber and satisfactory on-ice performance of a tire.

In a case where the rubber composition of the present disclosure contains an organic acid, a mass ratio of the inorganic blowing agent, the blowing aid, and the organic acid (the inorganic blowing agent: the blowing aid : the organic acid) is preferably in the range of 1 : 1.1 : 0.3 to 1 : 3.3 : 2, more preferably in the range of 1 : 1.1 : 0.6 to 1 : 3.3 : 1.4, and even more preferably in the range of 1 : 1.3 : 0.7 to 1 : 2.7 : 1.3 in terms of obtaining a satisfactory foaming rate of the vulcanized rubber and satisfactory on-ice performance of a tire.

(Other components)

In addition to the rubber component, the inorganic blowing agent, the blowing aid, the short fibers and the organic acid, compounding agents generally employed in the rubber industry, such as filler, softening agent, stearic acid, antioxidant, zinc oxide (zinc white), vulcanization accelerator, vulcanizing agent, and the like, may be optionally selected and added to the rubber composition of the present disclosure unless the addition thereof adversely affects the objects of the present disclosure. Commercially available products can be suitably used as those compounding agents.

Examples of the filler include carbon black, silica, and the like. Either a single type or combination of two or more types of those fillers may be used as the filler(s). A content of the filler, which is not particularly restricted, is preferably in the range of 10 to 150 parts by mass and more preferably in the range of 20 to 100 parts by mass with respect to 100 parts by mass of the rubber component.

Examples of the vulcanizing agent include sulfur, and the like. A content of the vulcanizing agent, when determined as a sulfur content, is preferably in the range of 0.1 to 10 parts by mass and more preferably in the range of 1 to 4 parts by mass with respect to 100 parts by mass of the rubber component.

Examples of the vulcanization accelerator include a thiazole-based vulcanization accelerator, a guanidine-based vulcanization accelerator, and the like. Either a single type or combination of two or more types of those vulcanization accelerators may be used as the vulcanization accelerator(s). A content of the vulcanization accelerator is preferably in the range of 0. 1 to 5 parts by mass and more preferably in the range of 0.2 to 3 parts by mass with respect to 100 parts by mass of the rubber component.

The rubber composition of the present disclosure can be manufactured by, for example: blending, mixing and kneading a rubber component, an inorganic blowing agent, a blowing aid, and various compounding agent(s) optionally selected according to necessity, by using a Banbury mixer, a roll, or the like; and subjecting the mixture thus mixed and kneaded, to warming, extrusion, and the like.

The rubber composition of the present disclosure is applicable to various rubber articles such as a tire. The rubber composition of the present disclosure is particularly suitable for tread rubber of a tire.

< Vulcanized rubber >

A vulcanized rubber of the present disclosure, as a vulcanized product of the rubber composition described above (obtainable by vulcanization of the rubber composition), is characterized in that it has a foaming rate in the range of 1 % to 45 %. The vulcanized rubber of the present disclosure, obtained by vulcanization of the rubber composition described above, has a low impact on the environment. Further, the vulcanized rubber significantly improves the on-ice performance of a tire when it is applied to the tire. The foaming rate of ≥ 1 %, of the vulcanized rubber, ensures satisfactorily achieving a good effect of improving the on-ice performance of a tire and the foaming rate of ≤ 45 %, of the vulcanized rubber, ensures satisfactorily high wear resistance of a tire when the vulcanized rubber is applied to the tire.

In the present disclosure, a "foaming rate" of the vulcanized rubber represents the average foaming rate Vs, which is specially calculated by formula (1) shown below.

$$Vs = (\rho_0/\rho_1 - 1) \times 100\ (\%) \quad \cdots \ (1)$$

In the formula (1), $\rho_1$ represents a density (g/cm$^3$) of the vulcanized rubber, i.e., the foamed rubber, and $\rho_0$ represents a density (g/cm$^3$) of a solid phase portion of the vulcanized rubber, i.e., the foamed rubber. A density of the vulcanized rubber and a density of a solid phase portion of the vulcanized rubber are calculated from mass (and volume) measured in air and mass (and volume) measured in ethanol, respectively. The foaming rate of the vulcanized rubber can be optionally adjusted by changing types, contents, etc., of the inorganic blowing agent, the blowing aid, and the organic acid described above.

The vulcanized rubber of the present disclosure preferably has voids therein each having a length of ≥ 1,000 μm. Application of the vulcanized rubber having voids therein, each void having a length of ≥ 1,000 μm, to a tire ensures good water film-removing capacity and drainability of the tire, thereby improving the on-ice performance of the tire. A length of each void of the vulcanized rubber is preferably ≥ 1,100 μm, more preferably ≥ 1,120 μm, and particularly preferably ≥ 1,125 μm.

The upper limit of a length of each void in the vulcanized rubber, which is not particularly restricted, is preferably ≤ 2,000 μm in terms of making the manufacturing process easy.

In the present disclosure, a length of a void of the vulcanized rubber represents the average length in the longitudinal direction of a plurality of voids. In the present disclosure, "a length of a void of the vulcanized rubber" described above can be determined by: observing a visual field area (7,240 μm × 5,430 μm) at a surface of the vulcanized rubber by a microscope; subjecting the image thus observed, to a binarization process, and measuring lengths of 20 to 30 voids; and obtaining the average of the lengths thus measured, of the voids.

A length of the void of the vulcanized rubber can be optionally adjusted by changing the average length of the short fibers described above.

The vulcanized rubber of the present disclosure is applicable to various rubber articles such as a tire. The vulcanized rubber of the present disclosure is particularly suitable for tread rubber of a tire.

< Tread rubber for tire >

A tread rubber for a tire, of the present disclosure, is characterized in that the tread rubber is made of the rubber composition or the vulcanized rubber described above. The tread rubber for a tire of the present disclosure, made of the rubber composition or the vulcanized rubber described above, has a low impact on the environment. Further, the tread rubber significantly improves the on-ice performance of a tire when it is applied to the tire.
The tread rubber for a tire, of the present disclosure, may be applied to either a new tire or a retreaded tire.

< Tire >

A tire of the present disclosure is characterized in that it has the rubber composition or the vulcanized rubber described above in a tread portion thereof. The tire of the present disclosure, having the rubber composition or the vulcanized rubber described above in a tread portion thereof, not only has a low impact on the environment but also exhibits excellent on-ice performance.
The tire of the present disclosure, which is excellent in the on-ice performance, is particularly useful for a winter tire such as a studless tire.

The tire of the present disclosure may be manufactured, depending on type of the tire, by either i) molding the aforementioned rubber composition in an unvulcanized state and subjecting a resulting green tire to vulcanization or ii) subjecting the aforementioned rubber composition to a preliminary vulcanization process, molding a resulting half-vulcanized rubber, and subjecting a resulting tire to a main vulcanization process. The tire of the present disclosure is preferably a pneumatic tire, wherein examples of gas with which the is to be inflated include inert gas such as nitrogen, argon, helium or the like, as well as ambient air and air of which oxygen partial pressure has been adjusted.

EXAMPLES

The present disclosure will be described further in detail by Examples hereinafter. The present disclosure is not limited by any means to these Examples.

< Preparation and evaluation of rubber composition >

Rubber composition samples were prepared by using a conventional Banbury mixer according to the blend formulations shown in Tables 1 to 3. Workability was evaluated during the preparation process for each of the rubber composition samples.
The rubber composition samples were vulcanized by the conventional method, whereby vulcanized rubber samples were obtained. A foaming rate and a void length were measured and the on-ice performance was evaluated by the methods described below for each of the vulcanized rubber samples thus obtained. The results are shown in Tables 1 to 3.

(1) Workability

Workability of each of the rubber composition samples according to the blend formulations shown in Table 2 and Table 3 was evaluated during the manufacturing process thereof. Specifically, whether or not the rubber composition sample adhered to the manufacturing facilities such as a roll during the manufacturing process thereof was determined for evaluation.
In Table 2 and Table 3, "Good" indicates that the rubber composition sample did not adhere to the manufacturing facilities such as a roll, thereby exhibiting good workability, and "Adhesion to roll" indicates that the rubber composition sample adhered to a roll, thereby exhibiting poor workability.

(2) Foaming rate

The average foaming rate Vs was calculated by formula (1) shown below as a foaming rate for each of the vulcanized rubber samples. The average foaming rate Vs was then evaluated by the criteria shown below.

$$Vs = (\rho_0/\rho_1 - 1) \times 100\ (\%) \quad \cdots \quad (1)$$

O (Good): The average foaming rate Vs is in the range of 1 % to 45 %.
$\times_1$ (Poor): The average foaming rate Vs is less than 1 %.
$\times_2$ (Poor): The average foaming rate Vs exceeds 45 %.

In the formula (1), $\rho_1$ represents a density (g/cm$^3$) of the vulcanized rubber, i.e., the foamed rubber, and $\rho_0$ represents a density (g/cm$^3$) of a solid phase portion of the vulcanized rubber, i.e., the foamed rubber. A density of the vulcanized rubber and a density of a solid phase portion of the vulcanized rubber were calculated from mass (and volume) measured in air and mass (and volume) measured in ethanol, respectively.

(3) Length of void

A test piece was cut out from each of the vulcanized rubber samples respectively obtained from the rubber composition samples according to the blend formulation shown in Table 1. A visual field area (7,240 μm × 5,430 μm) at a surface of the test piece was observed by a microscope. Next, the image of the visual field area thus observed was subjected to a binarization process. For each of voids observed in the image thus subjected to the binarization process, a length in the longitudinal direction of the void (the maximum value of lengths of lines connecting two arbitrary points on the void) was measured. Then, the average of the lengths in the longitudinal direction of the voids thus measured was calculated.

(4) On-ice performance (ICEμ)

A dynamic friction coefficient μ was determined by: cutting out a test piece (shape: a square of 25 mm × 25 mm, thickness: 2 mm) from each of the vulcanized rubber samples; pressing the test piece against fixed ice (-2 °C), moving the test piece on the ice reciprocatingly with continually pressing the test piece on the ice, and detecting a frictional force experienced during the reciprocal movement of the test piece, by a load cell; and calculating a dynamic friction coefficient μ from the frictional force thus detected.

The dynamic friction coefficient μ values are expressed as index values relative to the index value of Comp. Example 1-1 being "100" in Table 1.

The dynamic friction coefficient μ values are expressed as index values relative to the index value of Example 2-1 being "100" in Table 2.

The dynamic friction coefficient μ values are expressed as index values relative to the index value of Comp. Example 3-1 being "100" in Table 3.

The larger index value indicates the larger dynamic friction coefficient μ, i.e., the better on-ice performance.

[Table 1]

| | | | | Comp. Example 1-1 | Example 1-1 |
|---|---|---|---|---|---|
| Blend formulation | NR *1-1 | parts by mass | | 50 | 50 |
| | BR *1-2 | | | 30 | 30 |
| | SBR *1-3 | | | 20 | 20 |
| | Carbon black *1-4 | | | 35 | 35 |
| | Silica *1-5 | | | 35 | 35 |
| | Short fibers *1-6 | | | 2 | 2 |
| | Vucanization accelerators package *1-7 | | | 1.35 | 1.35 |
| | Sulfur | | | 2 | 2 |
| | Other chemical agents *1-8 | | | 49.73 | 49.73 |
| | Inorganic blowing agent (sodium bicarbonate) *1-9 | | | 3 | 6 |
| | Blowing aid (urea) *1-10 | | | 3 | 9 |
| Characteristics of vulcanized rubber | Foaming rate | % | | 9.8 | 30.3 |
| | Foaming rate (evaluation) | - | | ○ | ○ |
| | Void length | μm | | 954 | 1550 |
| Evaluation | On-ice performance (ICEμ) | - | | 100 | 106 |

*1-1 NR: natural rubber

*1-2 BR: butadiene rubber (high cis BR) manufactured by Zeon Corporation

*1-3 SBR: solution polymerization styrene-butadiene rubber (a content of bonded styrene = 10 mass %)

*1-4 Carbon black: a product manufactured by Asahi Carbon Co., Ltd., nitrogen adsorption specific surface area = 148 $m^2/g$

*1-5 Silica: a product manufactured by Tosoh Silica Corporation, nitrogen adsorption specific surface area = 222 $m^2/g$

*1-6 Short fiber: Resin 4 (flat resin) used in Example 4 of WO2018/207472, a short fiber obtained by forming a coating layer made of polyethylene (product name "Novatec™ HJ360" manufactured by Japan Polyethylene Corporation) on a surface of a hydrophilic fiber made of ethylene-vinyl alcohol copolymer (product name "EVAL™ F104B" manufactured by Kuraray Co., Ltd.), wherein, in a cross section taken perpendicular to a longitudinal direction of the flat resin, provided that A is the length of the cross section along a long diameter thereof and B is the length of the cross section along a short diameter thereof that is perpendicular to the long diameter, A/B = 2.7, the average value of the length A = 0.05 mm, the average area of a cross section taken perpendicular to a longitudinal direction of the flat resin = 0.0007 $mm^2$, the average of a length C in the

longitudinal direction of the flat resin = 3 mm

*1-7 Vulcanization accelerators package: the package includes vulcanization accelerator MBTS and vulcanization accelerator CZ.

*1-8 Other chemicals: those including antioxidant "Nocrac 6C", wax and resin

*1-9 Inorganic blowing agent: baking soda (sodium bicarbonate), product name "Cellborn FE507" manufactured by EIWA CHEMICAL IND.CO., LTD.

*1-10 Blowing aid: urea, product name "Cellpaste K5" manufactured by EIWA CHEMICAL IND.CO., LTD.

[Table 2]

| | | | Example 2-1 | Comp. Example 2-1 | Comp. Example 2-2 | Comp. Example 2-3 |
|---|---|---|---|---|---|---|
| Blend formulation | NR *2-1 | parts by mass | 55 | 55 | 55 | 55 |
| | BR *2-2 | | 30 | 30 | 30 | 30 |
| | SBR *2-3 | | 15 | 15 | 15 | 15 |
| | Carbon black *2-4 | | 50 | 50 | 50 | 50 |
| | Hydrogenated aliphatic acid *2-5 | | 4 | 4 | 4 | 4 |
| | Zinc white | | 3.5 | 3.5 | 3.5 | 3.5 |
| | Antioxidants *2-6 | | 2 | 2 | 2 | 2 |
| | Vulcanization accelerator *2-7 | | 1 | 1 | 1 | 1 |
| | Sulfur | | 1.2 | 1.2 | 1.2 | 1.2 |
| | Inorganic blowing agent (sodium bicarbonate) *2-8 | | 4 | 9 | 8 | 4 |
| | Blowing aid (urea) *2-9 | | 10 | 12 | 8 | 15 |
| Workability of rubber composition | | - | Good | Good | Adhesion to roll | Adhesion to roll |
| Foaming rate of vulcanized rubber (evaluation) | | - | ○ | ○ | ○ | ○ |
| Evaluation | On-ice performance (ICEμ) | Index | 100 | 97.0 | 89.6 | 84.1 |

*2-1 NR: natural rubber

*2-2 BR: butadiene rubber, "BR 150L" manufactured by Ube Industries, Ltd.

*2-3 SBR: styrene-butadiene rubber, "1500" manufactured by JSR Corporation

*2-4 Carbon black: "N134" manufactured by Asahi Carbon Co., Ltd.

*2-5 Hydrogenated fatty acid: "STEARIC ACID 50S" manufactured by New Japan Chemical Co., Ltd.

*2-6 Antioxidants: antioxidants including product name "Nocrac 6C" manufactured by Ouchi-Shinko Chemical Industrial Co., Ltd., the total content of the antioxidants in the rubber composition was 2 parts by mass.

*2-7 Vulcanization accelerator: "Sanceler CZ" manufactured by SANSHIN CHEMICAL INDUSTRY CO.,LTD.

*2-8 Baking soda: sodium bicarbonate, "Cellborn FE507" manufactured by EIWA

CHEMICAL IND.CO., LTD.

*2-9 Urea: “Cellpaste K5” manufactured by EIWA CHEMICAL IND.CO., LTD.

[Table 3]

| | | | | Example 3-1 | Example 3-2 | Example 3-3 | Example 3-4 | Example 3-5 | Example 3-6 | Example 3-7 | Example 3-8 | Example 3-9 | Example 3-10 | Comp. Example 3-1 | Example 3-11 | Example 3-12 |
|---|---|---|---|---|---|---|---|---|---|---|---|---|---|---|---|---|
| Blend formulation | NR *3-1 | | Parts by mass | 55 | 55 | 55 | 55 | 55 | 55 | 55 | 55 | 55 | 55 | 55 | 55 | 55 |
| | BR *3-2 | | | 30 | 30 | 30 | 30 | 30 | 45 | 30 | - | - | - | 30 | 30 | 30 |
| | Modified BR *3-3 | | | - | - | - | - | - | - | - | - | 30 | 45 | - | - | - |
| | SBR *3-4 | | | 15 | 15 | 15 | 15 | 15 | - | - | - | 15 | - | 15 | 15 | 15 |
| | Modified SBR *3-5 | | | - | - | - | - | - | - | 15 | 45 | - | - | - | - | - |
| | Carbon black *3-6 | | | 50 | 50 | 50 | 50 | 50 | 50 | 50 | 50 | 50 | 50 | 50 | 50 | 50 |
| | Hydrogenated aliphatic acid *3-7 | | | 4 | 4 | 4 | 4 | 4 | 4 | 4 | 4 | 4 | 4 | 4 | 4 | 4 |
| | Zinc white | | | 3.5 | 3.5 | 3.5 | 3.5 | 3.5 | 3.5 | 3.5 | 3.5 | 3.5 | 3.5 | 3.5 | 3.5 | 3.5 |
| | Wax | | | 1 | 1 | 1 | 1 | 1 | 1 | 1 | 1 | 1 | 1 | 1 | 1 | 1 |
| | Antioxidant *3-8 | | | 1 | 1 | 1 | 1 | 1 | 1 | 1 | 1 | 1 | 1 | 1 | 1 | 1 |
| | Vulcanization accelerator *3-9 | | | 1 | 1 | 1 | 1 | 1 | 1 | 1 | 1 | 1 | 1 | 1 | 1 | 1 |
| | Sulfur | | | 1.2 | 1.2 | 1.2 | 1.2 | 1.2 | 1.2 | 1.2 | 1.2 | 1.2 | 1.2 | 1.2 | 1.2 | 1.2 |
| | Inorganic blowing agent | Sodium bicarbonate *3-10 | | 4 | 4 | 3 | 2 | 5 | 4 | 4 | 4 | 4 | 4 | 4 | 6.5 | 4 |
| | Organic acid | Citric acid *3-11 | | - | - | - | 2 | - | - | - | - | - | - | - | - | - |
| | | Benzoic acid *3-12 | | - | - | - | - | - | - | - | - | - | - | - | 6.5 | - |
| | | Malonic acid *3-13 | | - | - | - | - | - | - | - | - | - | - | - | - | 4 |
| | Blowing aid | Urea *3-14 | | 8 | 6 | 6 | 4 | 14 | 8 | 8 | 8 | 8 | 8 | - | 13 | 8 |
| Workability of rubber composition | | | - | Good | Good | Good | Adhesion to roll | Good | Good | Good | Good | Good | Good | Good | Good | Good |
| Foaming rate of vulcanized rubber (evaluation) | | | - | ○ | ○ | ○ | ○ | ○ | ○ | ○ | ○ | ○ | ○ | ×1 | ○ | ○ |
| Evaluation | On-ice performance (ICEμ) | | Index | 145 | 123 | 130 | 137 | 145 | 140 | 135 | 145 | 126 | 147 | 100 | 154 | 140 |

*3-1 NR: natural rubber

*3-2 BR: butadiene rubber, “BR 150L” manufactured by Ube Industries, Ltd.

*3-3 Modified BR: modified butadiene rubber, “BR500” manufactured by JSR Corporation

*3-4 SBR: styrene-butadiene rubber, “1500” manufactured by JSR Corporation

*3-5 Modified SBR: modified styrene-butadiene rubber, synthesized by the method described below

(Method for synthesizing modified SBR)

A modified SBR was obtained by:

adding a cyclohexane solution of 1,3-butadiene and a cyclohexane solution of styrene to a dry, nitrogen-substituted pressure-resistant glass vessel having inner volume: 800 mL so that 67.5 g of 1,3-butadiene and 7.5 g of styrene were in the vessel;

then adding 0.6 mmol of 2,2-ditetrahydrofurylpropane and 0.8 mmol of n-butyllithium to the glass vessel and carrying out polymerization for 1.5 hours at 50 °C;

adding 0.72 mmol of N,N-bis(trimethylsilyl)-3-[diethoxy(methyl)silyl]propylamine as a modifier to the polymerization reaction system when a polymerization conversion ratio therein reached substantially 100 % and carrying out a modification reaction for 30 minutes at 50 °C;

adding 2 mL of an isopropanol solution of 2,6-di-t-butyl-p-cresol (BHT) (BHT concentration: 5 mass %) to the polymerization reaction system to stop the polymerization reaction; and

drying the product according to the conventional method, thereby obtaining a modified SBR.

It was found out, as a result of analysis of microstructures of the modified SBR thus obtained, that a content of bonded styrene was 10 mass %, a content of vinyl bond in the butadiene portion was 40 %, and the peak molecular weight was 200,000 in the modified SBR.

*3-6 Carbon black: “N134” manufactured by Asahi Carbon Co., Ltd.

*3-7 Hydrogenated fatty acid: “STEARIC ACID 50S” manufactured by New Japan Chemical Co., Ltd.

*3-8 Antioxidant: “Nocrac NS-6” manufactured by Ouchi-Shinko Chemical Industrial Co., Ltd.

*3-9 Vulcanization accelerator: “Sanceler CZ” manufactured by SANSHIN

CHEMICAL INDUSTRY CO.,LTD.

*3-10 Baking soda: sodium bicarbonate, “Cellborn FE507" manufactured by EIWA CHEMICAL IND.CO., LTD.

*3-11 Citric acid: citric acid having an SP value = 16.53 $(cal/cm^3)^{1/2}$, manufactured by Kanto Chemical Industry Co., Ltd.

*3-12 Benzoic acid: benzoic acid having an SP value = 11.93 $(cal/cm^3)^{1/2}$, manufactured by FUJIFILM Wako Pure Chemical Corporation

*3-13 Malonic acid: malonic acid having an SP value = 14.03 $(cal/cm^3)^{1/2}$, manufactured by Kanto Chemical Industry Co., Ltd.

*3-14 Urea: “Cellpaste K5” manufactured by EIWA CHEMICAL IND.CO., LTD.

It is understood from Tables 1 to 3 that the rubber compositions of Examples, in which: the total content of an inorganic blowing agent and a blowing aid is in the range of 1 to 20 parts by mass with respect to 100 parts by mass of a rubber component; and a mass ratio of the inorganic blowing agent with respect to the blowing aid (the inorganic blowing agent : the blowing aid) is in the range of 1 : 1.1 to 1 : 3.3, are unanimously excellent in the on-ice performance.

INDUSTRIAL APPLICABILITY

The rubber composition, the vulcanized rubber and the tread rubber of the present disclosure are applicable to a tire, a studless tire in particular. The tire of the present disclosure is particularly useful for a studless tire.

## Claims

**1.** A rubber composition, comprising:

a rubber component containing diene rubber;
an inorganic blowing agent; and
a blowing aid,
wherein the total content of the inorganic blowing agent and the blowing aid is in the range of 1 to 20 parts by mass with respect to 100 parts by mass of the rubber component, and
a mass ratio of the inorganic blowing agent with respect to the blowing aid (the inorganic blowing agent : the blowing aid) is in the range of 1 : 1.1 to 1 : 3.3.

**2.** The rubber composition of claim 1, wherein the blowing aid is urea.

**3.** The rubber composition of claim 1 or 2, wherein the inorganic blowing agent is selected from the group consisting of ammonium hydrogen carbonate and sodium hydrogen carbonate.

**4.** The rubber composition of claim 3, wherein the inorganic blowing agent is sodium hydrogen carbonate.

**5.** The rubber composition of any of claims 1 to 4, further comprising a hydrophilic short fiber.

**6.** The rubber composition of any of claims 1 to 5, wherein the diene rubber includes at least one selected from the group consisting of natural rubber and synthetic diene rubber.

**7.** The rubber composition of claim 6, wherein the synthetic diene rubber includes at least one selected from the group consisting of isoprene rubber, styrene-butadiene rubber, and butadiene rubber.

**8.** The rubber composition of claim 7, comprising, as the styrene-butadiene rubber, styrene-butadiene rubber having a content of bonded styrene therein of ≤ 15 mass %.

**9.** A vulcanized rubber as a vulcanized product of the rubber composition of any of claims 1 to 8, wherein the vulcanized rubber has a foaming ratio in the range of 1 % to 45 %.

**10.** The vulcanized rubber of claim 9, wherein the vulcanized rubber has voids therein each having a length of $\geq$ 1,000 μm.

**11.** A tread rubber for a tire, made of the rubber composition of any of claims 1 to 8 or the vulcanized rubber of claim 9 or 10.

**12.** A tire, having the rubber composition of any of claims 1 to 8 or the vulcanized rubber of claim 9 or 10 in a tread portion thereof.

**INTERNATIONAL SEARCH REPORT**

International application No.
**PCT/JP2021/027973**

**A. CLASSIFICATION OF SUBJECT MATTER**

***B60C 1/00***(2006.01)i; ***C08K 5/21***(2006.01)i; ***C08K 7/02***(2006.01)i; ***C08L 7/00***(2006.01)i; ***C08L 9/00***(2006.01)i; ***C08L 9/06***(2006.01)i; ***C08K 3/26***(2006.01)i
FI: C08L9/00; C08K3/26; C08K5/21; C08K7/02; C08L9/06; C08L7/00; B60C1/00 A

According to International Patent Classification (IPC) or to both national classification and IPC

**B. FIELDS SEARCHED**

Minimum documentation searched (classification system followed by classification symbols)

B60C1/00; C08K5/21; C08K7/02; C08L7/00; C08L9/00; C08L9/06; C08K3/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-2934 A (BRIDGESTONE CORPORATION) 11 January 2018 (2018-01-11) claims, paragraphs [0034], [0039], [0044], examples 7-9, 13-14 | 1-4, 6-7, 9-12 |
| Y | claims, paragraphs [0007], [0023], [0034], [0039], [0044], examples 7-9, 13-14 | 5, 8 |
| X | WO 2017/068772 A1 (BRIDGESTONE CORPORATION) 27 April 2017 (2017-04-27) claims, paragraph [0013], examples 6, 8, 11, comparative examples 4, 6 | 1-4, 6-7, 9-12 |
| Y | claims, paragraphs [0010], [0013], [0024], examples 6, 8, 11, comparative examples 4, 6 | 5, 8 |
| Y | JP 2019-108430 A (BRIDGESTONE CORPORATION) 04 July 2019 (2019-07-04) paragraphs [0015], [0017], [0048] | 5, 8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/027973**

| Patent document cited in search report | Publication date (day/month/year) | Patent family member(s) | Publication date (day/month/year) |
|---|---|---|---|
| JP 2018-2934 A | 11 January 2018 | (Family: none) | |
| WO 2017/068772 A1 | 27 April 2017 | US 2018/0291186 A1 claims, paragraphs [0013]-[0015], [0021]-[0023], [0045], examples 6, 8, 11, comparative examples 4, 6 | |
| | | EP 3366719 A1 | |
| | | CN 108137844 A | |
| | | JP 2020-122160 A | |
| JP 2019-108430 A | 04 July 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017068772 A1
- WO 2018207472 A